# EUROPÄISCHE PATENTANMELDUNG

(11) **EP 4 303 484 A1**
(43) Veröffentlichungstag der Anmeldung: **10.01.2024**
(21) Anmeldenummer: 23179918.0
(22) Anmeldetag: 19.06.2023
(51) Int. Cl.: F21V 7/04, F21V 7/06, G02B 19/00, F21Y 115/10

(54) **OPTISCHES ELEMENT**

(30) Priorität: 27.06.2022 DE 102022115898
(71) Anmelder: Zumtobel Lighting GmbH, 6850 Dornbirn (AT)
(72) Erfinder: LUDWICZAK-OSTERLOHER, Bogna, 6850 Dornbirn (AT); GASSNER, Patrik, 6850 Dornbirn (AT)
(74) Vertreter: Kiwit, Benedikt

(57) **Zusammenfassung**

Die Erfindung betrifft ein optisches Element (1) für ein optisches System (50) oder eine Leuchte (60). Das optische Element (1) weist auf: einen länglichen Körper (2), der sich ausgehend von einem Lichteintrittsbereich (21) und entlang einer Längsachse hin zu einem Lichtaustrittsbereich (22) erstreckt. Der Körper (2) weist auf: einen ersten Teil (23), der sich ausgehend von dem Lichteintrittsbereich (21) und entlang der Längsachse hin zu einem Lichtübertragungsbereich (25) erstreckt, und einen zweiten Teil (24), der sich ausgehend von dem Lichtübertragungsbereich (25) und entlang der Längsachse hin zu dem Lichtaustrittsbereich (22) erstreckt. Der erste Teil (23) weist in einem ersten Schnitt parallel zur Längsachse eine erste Kontur (230) auf, deren laterale Seiten (231, 232) deckungsgleich mit wenigstens einem Teil einer Parabel sind, sodass über den Lichteintrittsbereich (21) in den ersten Teil (23) eintretende und auf die lateralen Seiten (231, 232) treffende Lichtstrahlen so von den lateralen Seiten (231, 232) reflektiert werden, dass die so reflektierten Lichtstrahlen gerichtet über den Lichtübertragungsbereich (25) in den zweiten Teil (24) eintreten. Der zweite Teil (24) weist in einem zweiten Schnitt quer zur Längsachse eine zweite Kontur (240) auf, die einem Mehreck entspricht.

## Beschreibung

Die vorliegende Erfindung betrifft ein optisches Element, ein optisches System, das mehrere solcher optischen Elemente aufweist, und eine Leuchte, die solch ein optisches Element oder solch ein optisches System aufweist.

Optische Elemente kommen in Leuchten zur Anwendung, um beispielsweise eine Allgemeinbeleuchtung bereitzustellen. Die Leuchte kann dabei beispielsweise ein Downlight sein, also eine Leuchte, die im Wesentlichen nach unten Licht abstrahlt und dafür insbesondere an einer Decke oder dergleichen montiert sein kann. Bei einer Allgemeinbeleuchtung ist vorzugsweise ein Ausstrahlwinkel zwischen 50 bis 70° gefordert. Dabei kann ein LED-Modul in einer hochreflektiven Kammer angeordnet sein, die mit einer Streufolie abgeschlossen ist, sodass das Licht, das die Mischkammer verlässt, wenig gerichtet ist. An die Mischkammer kann zudem einen Reflektor anschließen, dessen Aufgabe darin besteht, gewisse Anforderung hinsichtlich der Entblendung, des UGR ("Unified Glare Rating") und, in gewissem Umfang, einer gewünschten Lichtverteilung zu erfüllen.

Die Misch- oder Lichtkammer bildet jedoch eine recht große Lichtaustrittsfläche. Zudem müssen in solchen Leuchten relativ hohe Reflektoren vorgesehen sein, um gute Entblendungswerte einzuhalten.

Nachteilhaft ist zudem, dass für entblendete Varianten eine erhöhte Leuchtenhöhe vorliegt, die nicht ohne weiteres reduziert werden kann. Zum Beispiel benötigt eine niedrigere Leuchte, das heißt, eine Leuchte mit insbesondere einem niedrigeren Reflektor, zusätzlich einen Entblendungsring. Dies vor allem dann, wenn hohe Lichtströme abgegeben werden sollen. Auch lassen sich mit solchen Leuchten gewisse Lichtverteilungen (Batwing, oval etc.) schwer oder nur aufwendig realisieren. Aufwendig bedeutet hier insbesondere, dass zusätzliche optische Komponente erforderlich sind.

Auch sind die besagten Leuchten für Lösungen, in denen die Farbtemperatur des abgestrahlten Lichts einstellbar ist - sogenannte "tuneable white" (TW) Lösungen -, nur schwer zu realisieren. Die Platzverhältnisse in Leuchten wie einem Downlight sind sehr begrenzt, insbesondere wenn als Lichtquelle hocheffiziente Mid-Power LEDs zur Anwendung kommen sollen. Es bleibt wenig Platz für eine Optik wie beispielsweise eine Primäroptik, die für übliche LED-Anordnungen in TW-Lösungen geeignet ist.

Die vorliegende Erfindung stellt sich die Aufgabe, ein optisches Element bereitzustellen, das die oben erwähnten Nachteile überwindet. Insbesondere soll ein optisches Element bereitgestellt werden, das höhere entblendete Lichtströme (Lumenoutputs) ermöglicht und möglichst platzsparend ist, also insbesondere eine niedrigere Höhe und damit auch eine niedrigere, durch das optische Element bedingte Leuchtenhöhe aufweist. Eine weitere Aufgabe besteht vorzugsweise darin, dass das optische Element für eine TW-Lösung besser geeignet ist. Auch soll vorzugsweise durch das optische Element ein modularer Aufbau von Leuchten mit unterschiedlichen Formfaktoren und eine Skalierbarkeit einer Leuchte ermöglicht werden.

Diese und andere Aufgaben, die beim Lesen der folgenden Beschreibung noch genannt werden können, werden durch den Gegenstand der unabhängigen Ansprüche gelöst. Vorteilhafte Weiterbildungen sind Gegenstand der hierauf rückbezogenen Unteransprüche.

Gemäß einem ersten Aspekt betrifft die Erfindung ein optisches Element, das aufweist: einen länglichen Körper, der sich ausgehend von einem Lichteintrittsbereich entlang einer Längsachse hin zu einem Lichtaustrittsbereich erstreckt. Der Körper weist auf: einen ersten Teil, der sich ausgehend von dem Lichteintrittsbereich entlang einer Längsachse hin zu einem Lichtübertragungsbereich erstreckt; und einen zweiten Teil, der sich ausgehend von dem Lichtübertragungsbereich und entlang der Längsachse hin zu dem Lichtaustrittsbereich erstreckt. Der erste Teil weist in einem ersten Schnitt parallel zur Längsachse eine erste Kontur auf, deren laterale Seiten deckungsgleich mit wenigstens einem Teil einer Parabel sind, sodass über den Lichteintrittsbereich in den ersten Teil eintretende und auf die lateralen Seiten treffende Lichtstrahlen so von den lateralen Seiten reflektiert werden, dass die so reflektierten Lichtstrahlen gerichtet über den Lichtübertragungsbereich in den zweiten Teil eintreten. Der zweite Teil weist in einem zweiten Schnitt quer zur Längsachse eine zweite Kontur auf, die einem Mehreck entspricht.

Über den ersten Teil wird also das Licht gerichtet, insbesondere derart, dass die aus dem Lichtübertragungsbereich austretenden Lichtstrahlen in einem definierten Ausstrahlwinkel (zum Beispiel in einem Bereich von 40-70°, vorzugsweise von 45°-55°, besonders bevorzugt 50°) gebündelt sind und/oder zumindest teilweise parallel zueinander sind. Der erste Teil kann ein Lichtverteilung-formendes Teil sein, um eine entsprechende Lichtverteilung zu generieren. Der an den ersten Teil anschließende zweite Teil weist eine andere Funktion auf, insbesondere die eines Lichtleiters zur Lichtdurchmischung. Der zweite Teil kann insbesondere in Form eines länglichen Lichtmischelements wie beispielsweise eines Mischstabs ausgebildet sein. Die Funktionen des Lichtrichtens und der Lichtdurchmischung sind also in dem optischen Element derart realisiert, dass zunächst über den ersten Teil ein Richten des über den Lichteintrittsbereich in das optische Element eintretenden Lichts erfolgt und anschließend über den zweiten Teil eine Durchmischung von Licht erfolgt, das von dem ersten Teil über den Lichtübertragungsbereich in den zweiten Teil eintritt, zum Beispiel Licht, das durch den ersten Teil gerichtet und/oder nicht gerichtet worden ist. Das Licht tritt dann aus dem zweiten Teil über den Lichtaustrittsbereich aus dem optischen Element aus, um eine Beleuchtung wie beispielsweise eine Allgemeinbeleuchtung zu bewirken.

Mit dem optischen Element kann eine besonders vorteilhafte Abstrahlcharakteristik bereitgestellt werden, die sich insbesondere für Lichtanwendungen mit einstellbarer Farbtemperatur eignet (TW-Lösungen etc.). Das aus dem Lichtaustrittsbereiche ausgekoppelte Licht weist insbesondere einen verbesserten Entblendungswert (UGR-Wert) und eine verbesserte Lichtverteilung auf. Das optische Element bietet zudem insbesondere den Vorteil, dass es platzsparend zur Anwendung kommen kann, insbesondere in Leuchten, in welchen enge Platzverhältnisse vorliegen. Insbesondere kann durch die Ausgestaltung des optischen Elements ein niedrigerer Reflektor auf der Lichtaustrittsseite des optischen Elements zur Anwendung kommen, ohne dass die Entblendung negativ beeinflusst wird. Der mehreckige Querschnitt des zweiten Teils bewirkt ferner, dass das optische Element relativ zu einem identischen optischen Element vorteilhaft angeordnet werden kann, beispielsweise indem die optischen Elemente in einer Richtung senkrecht zu ihren Längsachsen, die parallel zueinander sind, gestapelt oder geschachtelt werden. Das optische Element ist dadurch für einen modularen Aufbau und die Skalierbarkeit einer Leuchte besonders gut geeignet. Mit anderen Worten können durch Zusammensetzen mehrerer optischer Elemente unterschiedliche Anordnungen und Designs (rund, länglich, quadratisch, rechteckig etc.) einfach gebildet werden.

Ein Körper, der "länglich" ist, ist als ein Körper zu verstehen, der entlang der Längsachse eine Erstreckung aufweist, die wenigstens einem Vielfachen (wenigstens Zweifachen, wenigstens Dreifachen etc.) der Erstreckung des Körpers in einer Richtung senkrecht zur Längsachse, beispielsweise der Breite, entspricht.

Ein Schnitt "parallel zur Längsachse" bedeutet, dass die entsprechende Schnittebene parallel zur Längsachse ist, wobei die Längsachse vorzugsweise in der Schnittebene liegt.

Ein Schnitt "quer zur Längsachse" umfasst insbesondere einen Schnitt, deren Schnittebene senkrecht zur Längsachse verläuft, wodurch die Längsachse den Normalenvektor der Schnittebene bildet.

Der erste Teil kann in einem dritten Schnitt parallel zur Längsachse und senkrecht zum ersten Schnitt eine dritte Kontur aufweisen, deren laterale Seiten deckungsgleich mit wenigstens einem Teil einer weiteren (also zweiten) Parabel, die von der (oben genannten, also ersten) Parabel vorzugsweise unterschiedlich ist, sind, sodass über den Lichteintrittsbereich in den ersten Teil eintretende und auf die lateralen Seiten der dritten Kontur treffende Lichtstrahlen so von diesen lateralen Seiten reflektiert werden, dass die so reflektierten Lichtstrahlen gerichtet über den Lichtübertragungsbereich in den zweiten Teil eintreten. Diese aus dem Lichtübertragungsbereich austretenden Lichtstrahlen sind vorzugsweise so gerichtet, dass sie in einem definierten Ausstrahlwinkel (zum Beispiel in einem Bereich von 40-70°, vorzugsweise von 45°-55°, besonders bevorzugt 50°) gebündelt sind und/oder zumindest teilweise parallel zueinander sind.

Die erste Kontur und die dritte Kontur des ersten Teils können sich beispielsweise dadurch ergeben, dass der erste Teil in Form eines Teils eines elliptischen Paraboloids vorgesehen ist. Der Teil des Paraboloids kann dadurch gebildet sein, dass von dem Paraboloid ein Unterteil, das den Scheitel des Paraboloids aufweist, abgetrennt ist (Trennebene senkrecht zur Längsachse). Das Paraboloid kann bezüglich der Längsachse rotationssymmetrisch oder -asymmetrisch und/oder bezüglich der ersten Schnittebene und/oder dritten Schnittebene symmetrisch ausgebildet sein.

Die weitere (zweite) Parabel kann von der (ersten) Parabel unterschiedlich sein, indem die weitere Parabel der Gleichung y=a^{∗}x² und die Parabel der Gleichung y=b^{∗}x² folgt, wobei a und b jeweils größer als 0 sind und a<b. Die weitere Parabel kann im Vergleich zu der Parabel geschwenkt sein. Dadurch kann die Parabel im Vergleich zu der weiteren Parabel verschoben, gestreckt und/oder gestaucht sein. Durch Bereitstellung der Parabeln derart, dass sie unterschiedlich voneinander sind, kann die Lichtverteilungsbreite besonders vorteilhaft eingestellt werden.

Bevorzugt ist, wenn in einer Ebene senkrecht zur Längsachse die lateralen Seiten der ersten Kontur eine erste Breite und die lateralen Seiten der dritten Kontur eine zweite Breite definieren, wobei die erste Breite kleiner ist als die zweite Breite. Dadurch kann die Lichtverteilung verbreitert werden, wodurch sich eine besonders gute Abstrahlcharakteristik des optischen Elements ergibt. Die unterschiedlichen Breiten können sich beispielsweise dadurch ergeben, dass die Parabeln, die die erste und dritte Kontur definieren, unterschiedlich sind.

Der erste Teil kann in einem oder jedem Schnitt quer zur Längsachse eine ellipsenförmige oder kreisförmige Kontur aufweisen. Dadurch kann die Lichtverteilung besonders vorteilhaft verbreitert werden. In einer Ausführungsform kann der erste Teil in einem ersten Schnitt quer zur Längsachse eine ellipsenförmige Kontur aufweisen und in einem zweiten Schnitt quer zur Längsachse, der näher an dem Lichtübertragungsbereich ist als der erste Schnitt, eine Kontur aufweisen, die kreisförmig ist oder zumindest näher an die Form eines Kreises kommt als die Kontur im ersten (Quer-)Schnitt. Insbesondere kann der erste Teil einen variablen Querschnitt aufweisen, der, ausgehend von einer ellipsenförmigen Kontur, mit abnehmenden Abstand zum Lichtübertragungsbereich in eine kreisförmige Kontur übergeht.

Ist der erste Teil durch wenigstens die Parabel und die weitere Parabel definiert, können diese Parabeln über unterschiedliche Führungslinien ineinander übergehen. Die Führungslinien können unterschiedliche Formen bilden, beispielsweise eine ellipsenförmige Form im Bereich des Lichteintrittsbereichs (oder eine sonstige Form, die in Längsrichtung gesehen eine Lichtquelle, die angeordnet ist, um Licht über den Lichteintrittsbereich in den ersten Teil einzukoppeln, umläuft) und eine kreisförmige Form im Bereich des Lichtübertragungsbereichs.

Der erste Teil kann in einem oder jedem Schnitt quer zur Längsachse einen Vollquerschnitt aufweisen. Mit anderen Worten ist es bevorzugt, wenn der erste Teil in einem oder jedem Schnitt quer zur Längsachse keinen Hohlquerschnitt aufweist, also die jeweilige Kontur einen Bereich begrenzt, der komplett mit Material ausgefüllt ist und damit keinen Teil von einem Hohlraum bildet.

Der erste Teil kann eine erste Länge (Höhe) aufweisen, die wenigstens 20 %, vorzugsweise wenigstens 40 %, besonders bevorzugt 50 % oder mehr der Gesamtlänge des Körpers entspricht. Die erste Länge ist die Erstreckung des ersten Teils parallel zur Längsachse, und die Gesamtlänge des Körpers ist die Gesamterstreckung des Körpers parallel zur Längsachse, also beispielsweise die Höhe des länglichen Körpers. Durch Bereitstellung des ersten Teils mit einer definierten ersten Länge kann eine definierte, insbesondere breite Lichtverteilung eingestellt werden.

Der zweite Teil kann in einem Schnitt parallel zur Längsachse eine Kontur aufweisen, deren laterale Seiten jeweils wenigstens teilweise gerade und/oder gebogen sind und/oder parallel zueinander verlaufen. Zum Beispiel können diese lateralen Seiten sich so erstrecken, dass sie nicht deckungsgleich mit wenigstens einem Teil einer Parabel sind. Die lateralen Seiten sind dadurch besonders gut für eine vorteilhafte Durchmischung des über den Lichtübertragungsbereich in den zweiten Teil eintretenden Lichts geeignet. Die lateralen Seiten des zweiten Teils können so vorgesehen sein, dass Lichtstrahlen, die auf diese lateralen Seiten treffen, aus dem Lichtaustrittsbereich gemischt austreten.

Die zweite Kontur kann einem Mehreck entsprechen, dessen Seiten gebogen oder gerade sind und/oder gleichlang sind. In einer besonders bevorzugten Ausführungsform ist das Mehreck der zweiten Kontur ein vorzugsweise regelmäßiges Sechseck (Hexagon).

Der zweite Teil kann in jedem Schnitt quer zur Längsachse eine Kontur aufweisen, die einem Mehreck wie beispielsweise einem Sechseck entspricht. Dadurch kann der zweite Teil in Form einer mehreckigen Säule ausgebildet sein. Der zweite Teil kann sich entlang der Längsachse insbesondere so erstrecken, dass er ausgehend von einem runden (beispielsweise kreisrunden) Querschnitt über einen mehreckigen, insbesondere sechseckigen Querschnitt mit gebogenen Seiten in einen mehreckigen, insbesondere sechseckigen (hexagonalen) Querschnitt mit geraden Seiten übergeht. Dadurch ergibt sich ein besonders stetiger Übergang von dem Lichtübertragungsbereich bis hin zum Lichtaustrittsbereich, was eine besonders gute Lichtdurchmischung bewirkt.

Der zweite Teil kann in einem oder jedem Schnitt quer zur Längsachse einen Vollquerschnitt aufweisen. Mit anderen Worten ist es bevorzugt, wenn der zweite Teil in einem oder jedem Schnitt quer zur Längsachse keinen Hohlquerschnitt aufweist, also die jeweilige Kontur einen Bereich begrenzt, der komplett mit Material ausgefüllt ist und damit keinen Teil von einem Hohlraum bildet.

Der zweite Teil kann eine zweite Länge aufweisen, die wenigstens 20 %, vorzugsweise wenigstens 40 %, besonders bevorzugt 50 % oder mehr der Gesamtlänge des Körpers entspricht. Die zweite Länge ist die Erstreckung des zweiten Teils parallel zur Längsachse. Die zweite Länge kann 9 mm oder mehr, vorzugsweise 10 mm oder mehr betragen.

Der Lichteintrittsbereich kann eine ellipsenförmige Kontur aufweisen.

Der Lichteintrittsbereich kann eine ebene Fläche aufweisen, die quer, insbesondere senkrecht zur Längsachse ist. Die (Außen-)Kontur des Lichteintrittsbereichs begrenzt vorzugsweise die ebene Fläche. In anderen Ausführungsformen kann der Lichteintrittsbereich auch eine Aussparung zur Aufnahme einer oder mehrerer Lichtquellen oder LEDs aufweisen.

Der Lichtübertragungsbereich kann eine kreisförmige oder mehreckige Kontur aufweisen, wobei die Seiten der mehreckigen Kontur jeweils gebogen sein können. Dadurch ist über den Lichtübertragungsbereich ein besonders guter Übergang von dem ersten Teil zu dem zweiten Teil gebildet. Insbesondere kann durch einen derartigen Lichtübertragungsbereich eine Stufe zwischen dem ersten Teil und dem zweiten Teil oder zumindest ein unstetiger Übergang vermieden werden.

Der Lichtaustrittsbereich kann eine Kontur aufweisen, die einem Mehreck entspricht, beispielsweise einem Mehreck, dessen Seiten gerade und/oder gleichlang sind. Durch einen mehreckigen Lichtaustrittsbereich ergibt sich insbesondere Vorteil, dass das optische Element mittels der Lichtaustrittsbereiche besonders platzsparend angeordnet werden kann, beispielsweise benachbart zu einem weiteren optischen Element.

Der Lichtaustrittsbereich kann eine Streustruktur zur streuenden Lichtabgabe aufweisen. Dadurch kann die Lichtabgabe über den Lichtaustrittsbereich noch weiter homogenisiert werden.

Die Streustruktur kann ein Streumaterial oder Streupartikel aufweisen. Das Streumaterial oder die Streupartikel besteht/bestehen insbesondere aus einem Material, das von dem Material, aus dem der Körper hergestellt ist, unterschiedlich ist. Die Streustruktur kann definierte geometrische Strukturen aufweisen, die in Draufsicht gesehen raster- oder gitteförmig ausgebildet sein können. Die geometrischen Strukturen können beispielsweise Rillen und/oder Aufrauhungen aufweisen oder sein. Die Streustruktur kann eine lentikulare Struktur aufweisen.

Der Lichtaustrittsbereich kann die Streustruktur aufweisen, wohingegen andere Bereiche des Körpers, beispielsweise der erste und/oder der zweite Teil, keine Streustruktur aufweisen, in solchen Bereichen also insbesondere das Streumaterial oder die Streupartikel nicht vorgesehen oder eingebracht sind.

Die Streustruktur kann eine Folie aufweisen. Insbesondere kann die Folie das Streumaterial und/oder die Streupartikel aufweisen. Die Folie kann beispielsweise auf den zweiten Teil geklebt sein.

Bevorzugt ist, wenn die Streustruktur integral mit dem Körper ausgebildet ist, beispielweise indem das Streumaterial oder die Streupartikel in einem formgebenden Verfahren zur Herstellung des Lichtaustrittsbereichs eingegeben werden. Alternativ oder zusätzlich kann die Streustruktur auch nachträglich in den Lichtaustrittsbereich eingebracht werden. Die geometrischen Strukturen können beispielsweise durch die Form, mit der der Körper bereitgestellt, insbesondere gespritzt wird, erhalten sein.

Der erste und zweite Teil können einstückig miteinander ausgebildet sein. Mit anderen Worten kann der erste Teil integral mit dem zweiten Teil verbunden sein, sodass sie nur ein Teil, nämlich den Körper, bilden. Der Lichtübertragungsbereich stellt vorzugsweise die integrale Verbindung zwischen dem ersten Teil und dem zweiten Teil dar. In einer anderen Ausführungsform können der erste und zweite Teil separat voneinander ausgebildet sind. Der erste Teil und der zweite Teil sind dann vorzugsweise so vorgesehen, dass der Kontaktbereich zwischen dem ersten Teil und dem zweiten Teil der Lichtübertragungsbereich ist, wobei der Lichtübertragungsbereich keinen Luftspalt bildet oder aufweist. Anders gesagt ist zwischen dem ersten Teil und dem zweiten Teil vorzugsweise kein Luftspalt vorgesehen.

Der Körper kann beispielsweise durch Spritzgießen erhalten sein. Der Körper kann insbesondere erhalten sein, indem ein Rohmaterial (flüssiger Kunststoff etc.) in eine Form gegossen wird. Das Spritzgießen zum Erhalten des Körpers kann in wenigstens zwei Schritten erfolgen: einem ersten Schritt, in dem ein Kern des Körpers gespritzt wird, und einem zweiten Schritt, in dem eine Außenhaut des Körpers gespritzt wird, wobei die Außenhaut vorzugsweise wenigstens die erste und zweite Kontur und optional die dritte Kontur aufweist. Die Außenhaut kann also vorzugsweise die Funktion oder Funktionen des Körpers, insbesondere Lichtrichten und Lichtdurchmischung, bereitstellen. Der Körper besteht vorzugsweise aus einem transparenten Material. Das Material des Körpers kann ein Kunststoff und/oder Glas sein.

Das optische Element kann eine Linse sein. Der Körper kann einen Block aufweisen oder bilden, der eine Linsenfunktion bereitstellt, wobei die Linsenfunktion wenigstens durch den ersten Teil bereitgestellt ist. In einer Ausführungsform ist der Körper oder das optische Element ein Linsenblock. Der Körper kann insbesondere ein Glasblock sein.

Gemäß einem zweiten Aspekt betrifft die Erfindung ein optisches System, das mehrere optische Elemente wie oben beschrieben aufweist.

Die optischen Elemente können über ihre zweiten Teile miteinander in Kontakt stehen. Dadurch sind die optischen Elemente sehr kompakte nebeneinander angeordnet. Der Kontakt zwischen den optischen Elementen ist vorzugsweise ein flächiger Kontakt. Der flächige Kontakt kann beispielsweise dadurch erfolgen, dass eine Außenfläche des zweiten Teils des einen optischen Elements und eine Außenfläche des zweiten Teils des anderen optischen Elements jeweils eben ausgebildet sind (also insbesondere nicht konvex oder konkav sind) und aufeinanderstoßen. Der Kontakt zwischen den optischen Elementen findet vorzugsweise zumindest an den Bereichen der zweiten Teile statt, die in ihrem Schnitt quer zur Längsachse die zweite Kontur und/oder eine mehreckige Kontur aufweisen, wobei die mehreckige Kontur vorzugsweise zumindest eine Seite aufweist, die gerade ist und den Kontakt zum jeweils anderen optischen Element herstellt.

Durch den Kontakt zwischen den optischen Elementen kann bewirkt werden, dass Lichtstrahlen, die in den zweiten Teil des ein optischen Elements eintreten, innerhalb dieses zweiten Teils nicht reflektiert werden, sondern über den Kontaktbereich mit dem anderen optischen Element in dessen zweiten Teil eintreten. Dadurch kann eine besonders vorteilhafte Abstrahlcharakteristik bereitgestellt werden.

Durch die zumindest teilweise mehreckige Ausbildung der zweiten Teile der jeweiligen optischen Elemente können die optischen Elemente vor allem sehr kompakt in einer Ebene oder Richtung senkrecht zu den jeweiligen Längsachsen, die parallel und voneinander beabstandet sind, gestapelt und/oder geschachtelt werden. Die optischen Elemente sind vorzugsweise so vorgesehen, dass deren Lichtaustrittsbereiche eine geschlossene, vorzugsweise zusammenhängende Fläche bilden. Eine geschlossene Fläche bedeutet hierbei insbesondere, dass bei einem Blick auf die einzelnen Lichtaustrittsbereiche keine Spalten, sondern allenfalls Fugen zwischen benachbarten und miteinander in Kontakt stehenden optischen Elementen erkennbar sind.

Die optischen Elemente können so aneinander angrenzend angeordnet sein, dass die Lichtaustrittsbereiche in Richtung parallel zu den jeweiligen Längsachsen gesehen (also bei Blick auf die einzelnen Lichtaustrittsbereiche) ein vorzugsweise wabenförmiges Gitter bilden. Dadurch kann das optische Element über das Gitter Licht abgeben, vorzugsweise derart, dass zwischen benachbarten Gitterelementen keine Bereiche wie beispielsweise Spalten gebildet sind, über die kein Licht abgegeben werden kann. Die Lichtabgabe durch das optische Element ist dadurch besonders homogen.

Die erste Kontur des ersten Teils jedes optischen Elements kann sich in einer jeweiligen Ebene erstrecken, wobei die optischen Elemente vorzugsweise so angeordnet sind, dass die Ebene des einen optischen Elements zur Ebene des anderen optischen Elements parallel oder quer, insbesondere schräg (d.h. nicht senkrecht) verläuft. Mit anderen Worten können die optischen Elemente zueinander und relativ zu einer Achse, die parallel zu den jeweiligen Längsachsen der optischen Elemente ist, gedreht zueinander sein. Durch eine solche Anordnung können die optischen Elemente eine besonders homogene Lichtabgabe bereitstellen. Insbesondere kann dadurch eine Lichtverteilung durch das optische System bereitgestellt werden, die symmetrisch, insbesondere rotationssymmetrisch ist. Die jeweilige Ebene kann eine Symmetrieebene des ersten Teils und/oder des zweiten Teils des Körpers sein.

Der Winkel, den die Ebenen einschließen, kann 360° geteilt durch die Anzahl der Seiten (oder Ecken) des Mehrecks der zweiten Kontur oder einem ganzzahligen Vielfachen von 360° geteilt durch die Anzahl der Seiten (oder Ecken) des Mehrecks der zweiten Kontur entsprechen. Das ganzzahlige Vielfache liegt vorzugsweise in der Menge von 2 bis n-1, wobei n die Anzahl der Seiten oder Ecken des Mehrecks ist. Der Winkel, den die Ebenen einschließen, kann insbesondere 60°, 120°, 180°, 240° oder 300° entsprechen.

Die dritte Kontur des ersten Teils jedes optischen Elements kann sich in einer jeweiligen weiteren Ebene erstrecken, wobei die optischen Elemente vorzugsweise so angeordnet sind, dass die weitere Ebene des einen optischen Elements zur weiteren Ebene des anderen optischen Elements parallel oder quer, insbesondere schräg (d.h. nicht senkrecht) verläuft. Die jeweilige weitere Ebene kann eine Symmetrieebene des ersten Teils und/oder des zweiten Teils des Körpers sein und/oder senkrecht zu der Ebene sein, in der sich die erste Kontur erstreckt.

Das optische System kann einen Reflektor aufweisen. Der Reflektor kann in Kombination mit einem oder mehreren optischen Elementen vorgesehen sein. Die einen oder mehreren optischen Elemente sind so angeordnet, dass die aus der Lichtaustrittsfläche des optischen Elements oder den Lichtaustrittsflächen der optischen Elemente austretenden Lichtstrahlen in den Reflektor eintreten können, um von dem Reflektor wenigstens zum Teil reflektiert und vorzugsweise gerichtet zu werden. Der Reflektor begrenzt vorzugsweise einen Raum, in dem das optische Element oder die optischen Elemente jeweils wenigstens teilweise angeordnet ist/sind. In einer anderen Ausführungsform kann der Reflektor von dem optischen Element oder den optischen Elementen beabstandet sein.

Gemäß einem weiteren Aspekt betrifft die Erfindung eine Leuchte, die aufweist: ein wie oben beschriebenes optisches Element oder ein wie oben beschriebenes optisches System; und eine oder mehrere Lichtquellen.

Jede der Lichtquellen ist vorzugsweise so angeordnet, dass sie in ein ihr zugeordnetes optisches Element Licht einkoppeln oder abgeben kann. Mit anderen Worten weist bevorzugt jedes optische Element eine eigene Lichtquelle auf.

Die Leuchte kann beispielsweise an einer Decke befestigbar sein. Das Befestigungselement kann von dem optischen System umgeben sein. In einer Ausführungsform ist die Leuchte ein sogenanntes Downlight.

Die Leuchte weist vorzugsweise wenigstens zwei Lichtquellen auf. Diese erstrecken sich jeweils entlang einer jeweiligen Längsrichtung. Dies bedeutet, dass jede der Lichtquellen vorzugsweise länglich ausgebildet ist, also eine Länge aufweist, die größer ist als die Breite der jeweiligen Lichtquelle; die Tiefe der Lichtquelle entspricht der Höhe der Lichtquelle parallel zur Hauptabstrahlrichtung. Die Länge ist dabei parallel zu der jeweiligen Längsrichtung.

Die Lichtquellen sind vorzugsweise so angeordnet, dass die Längsrichtung der einen Lichtquelle zur Längsrichtung der anderen Lichtquelle entgegengesetzt oder quer, insbesondere schräg (d.h. nicht senkrecht) verläuft. Mit anderen Worten können die Lichtquellen zueinander und relativ zu einer Achse, die parallel zu den jeweiligen Längsachsen der optischen Elemente ist, gedreht zueinander sein. Durch eine solche Anordnung der Lichtquellen wird die Lichtabgabe durch die Leuchte besonders homogen. Insbesondere kann durch eine solche Anordnung der Lichtquellen in Kombination mit den optischen Elementen, in die die unterschiedlich ausgerichteten Lichtquellen Licht einkoppeln können, eine Lichtverteilung durch das optische System bereitgestellt werden, die symmetrisch, insbesondere rotationssymmetrisch ist. Insbesondere kann die erzeugte Lichtverteilung eine ovale Form aufweisen. Durch die unterschiedlich ausgerichteten Lichtquellen lässt sich zudem ein Farbmuster besser auflösen.

Jede der Lichtquellen ist vorzugsweise so angeordnet, dass die jeweilige Längsrichtung parallel oder senkrecht verläuft zu: einer Ebene, in der sich die erste Kontur des der jeweiligen Lichtquelle zugeordneten optischen Elements erstreckt, und/oder einer Seite des Mehrecks der zweiten Kontur des der jeweiligen Lichtquelle zugeordneten optischen Elements. Dadurch kann jede der Lichtquellen Licht so in das jeweilige optische Element einkoppeln, dass das so eingekoppelte Licht besonders gut durch die beiden Teile des optischen Elements optisch beeinflusst wird. Dadurch ergibt sich eine besonders vorteilhafte Lichtabgabe und Lichtverteilung.

Die Lichtquellen können in Lichtabgaberichtung gesehen jeweils rechteckig ausgebildet sein. Die rechteckige Ausbildung der jeweiligen Lichtquelle kann sich beispielsweise dadurch ergeben, dass die Lichtquelle in Draufsicht gesehen eine rechteckige Kontur aufweist, die sich aus mehreren quadratischen Lichtquellenteilen ergibt, wobei zwischen benachbarten Lichtquellenteilen ein Spalt oder Abstand vorgesehen sein kann. Die rechteckige Ausbildung der jeweiligen Lichtquelle kann sich alternativ oder zusätzlich dadurch ergeben, dass die Lichtquelle eine in Draufsicht gesehen rechteckige Platte wie beispielsweise eine Leiterplatte oder Modulplatte aufweist. Die Länge der Lichtquelle kann beispielsweise wenigstens 6,5 mm, vorzugsweise 7 mm oder mehr betragen, wobei die Breite der Lichtquelle beispielsweise 3 mm oder mehr beträgt

Der Winkel, den die Längsrichtungen einschließen, kann 360° geteilt durch die Anzahl der Seiten (oder Ecken) des Mehrecks der zweiten Kontur oder einem ganzzahligen Vielfachen von 360° geteilt durch die Anzahl der Seiten (oder Ecken) des Mehrecks der zweiten Kontur entsprechen. Das ganzzahlige Vielfache liegt vorzugsweise in der Menge von 2 bis n-1, wobei n die Anzahl der Seiten oder Ecken des Mehrecks ist. Der Winkel, den die Längsrichtungen einschließen, kann insbesondere 60°, 120°, 180°, 240° oder 300° entsprechen.

Jede der Lichtquellen kann nur eine LED oder zwei oder mehr LEDs aufweisen. Weist jede der Lichtquellen wenigstens zwei LEDs auf, kann eine erste LED zur Abgabe von kaltweißem Licht vorgesehen sein und eine zweite LED zur Abgabe von warmweißen Licht. Das kaltweiße Licht weist vorzugsweise eine Farbtemperatur von mehr als 4000 K, vorzugsweise von 5000 K oder mehr auf, insbesondere eine Farbtemperatur, die in einem Bereich von 3000 K bis 5500 K liegt. Das warmweiße Licht weist vorzugsweise eine Farbtemperatur von weniger als 4000 K, vorzugsweise von 3500 K oder weniger auf, insbesondere eine Farbtemperatur, die in einem Bereich von 2500 K bis 3500 K liegt. Ist nur eine LED in der Lichtquelle vorgesehen, kann diese LED ausgebildet sein, die Farbtemperatur des abgegebenen Lichts einzustellen, insbesondere in einem Bereich von warmweißen Licht bis kaltweißem Licht.

Jede der einen oder mehreren LEDs kann eine Platte (zum Beispiel eine Leiterplatte) aufweisen, die in Draufsicht gesehen im Wesentlichen quadratisch oder rechteckig oder mehreckig (beispielsweise sechseckig) ausgebildet ist. Die Platte kann dabei so vorgesehen sein, dass mehrere Lichtquellen in einer Richtung quer zur Hauptabstrahlrichtung stapel- oder schachtelbar und damit dicht nebeneinander anordenbar sind. Die LEDs können jeweils eine Chip-On-Board (COB)-LED sein. Die eine oder mehreren LEDs kann/können eine Mid-Power und/oder High-Power LED aufweisen. Alternativ oder zusätzlich kann die jeweilige LED eine OLED oder eine sonstige Art von LED aufweisen. Weist die Lichtquelle nur eine LED auf, kann die LED eine High-Power LED sein. Weist die Lichtquelle mehrere LEDs auf, können die LEDs jeweils eine Mid-Power LED sein. Durch ausschließliches Vorsehen von Mid-Power LEDs in der Lichtquelle kann die Lichtquelle besonders einfach, insbesondere kostengünstig bereitgestellt werden, insbesondere im Vergleich zu einer Lichtquelle mit einer High-Power LED.

Die LEDs können entlang der Längsrichtung der jeweiligen Lichtquelle angeordnet sein, vorzugsweise derart, dass die erste LED in Längsrichtung gesehen hinter der zweiten LED angeordnet ist. Mit anderen Worten kann die Längsrichtung der jeweiligen Lichtquelle durch die Anordnung der ersten LED und der zweiten LED definiert sein, sodass die Längsrichtung vorzugsweise von der zweiten LED in Richtung der ersten LED zeigt.

Nachfolgend wird die Erfindung anhand der Figuren der Zeichnungen, in denen vorteilhafte Ausführungsbeispiele der Erfindung dargestellt sind, beispielhaft beschrieben. In den Zeichnungen zeigen:
- Figur 1: eine schematische perspektivische Ansicht eines optischen Elements gemäß einer Ausführungsform der vorliegenden Erfindung;
- Figur 2: eine schematische perspektivische Ansicht eines optischen Elements gemäß einer Ausführungsform der vorliegenden Erfindung;
- Figur 3: eine schematische Draufsicht eines optischen Systems gemäß einer Ausführungsform der vorliegenden Erfindung;
- Figur 4: eine schematische Draufsicht eines optischen Systems gemäß einer Ausführungsform der vorliegenden Erfindung;

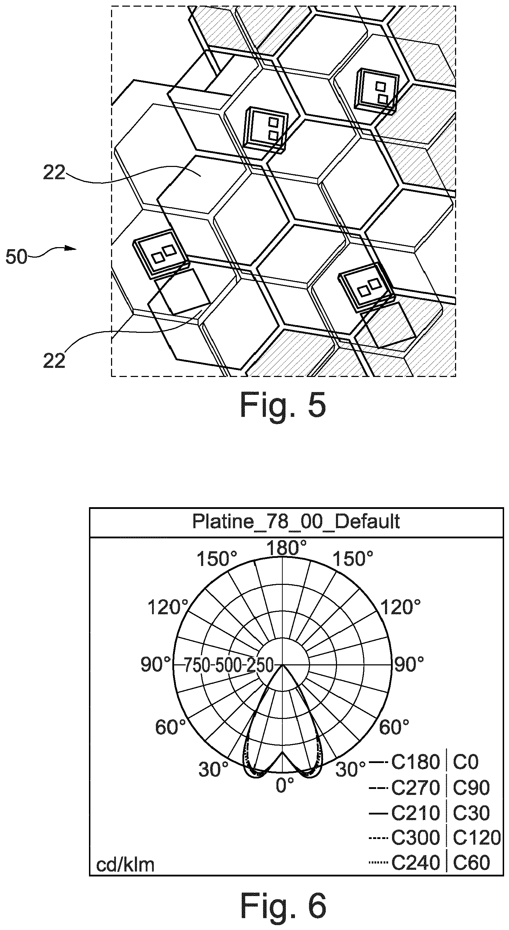

- Figur 5: eine perspektivische schematische Ansicht eines Details des in der Figur 4 dargestellten optischen Systems;
- Figur 6: eine durch ein optisches Element gemäß einer Ausführungsform der vorliegenden Erfindung bewirkte Lichtverteilungskurve;

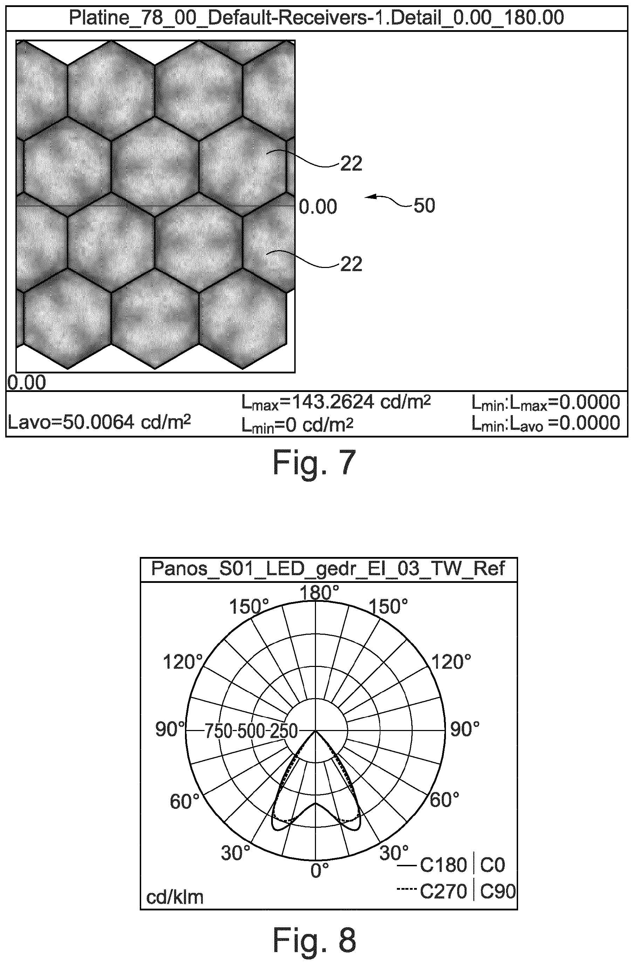

- Figur 7: das Erscheinungsbild eines optischen Systems gemäß einer Ausführungsform der Erfindung, wenn Lichtquellen Licht in die optischen Elemente einkoppeln;
- Figur 8: eine weitere, durch ein optisches Element gemäß einer Ausführungsform der Erfindung bewirkte Lichtverteilungskurve;
- Figur 9: eine schematische Draufsicht einer Leuchte gemäß einer Ausführungsform der Erfindung; und
- Figur 10: eine schematische perspektivische Ansicht einer Leuchte gemäß einer Ausführungsform der Erfindung.

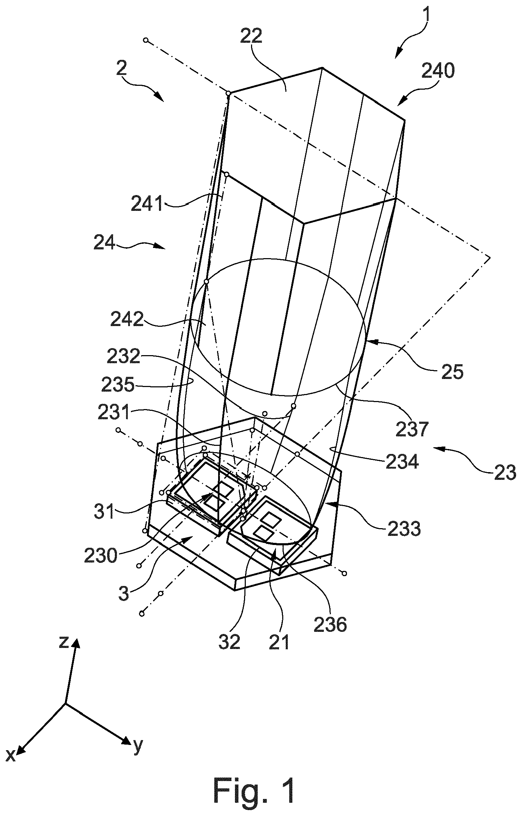

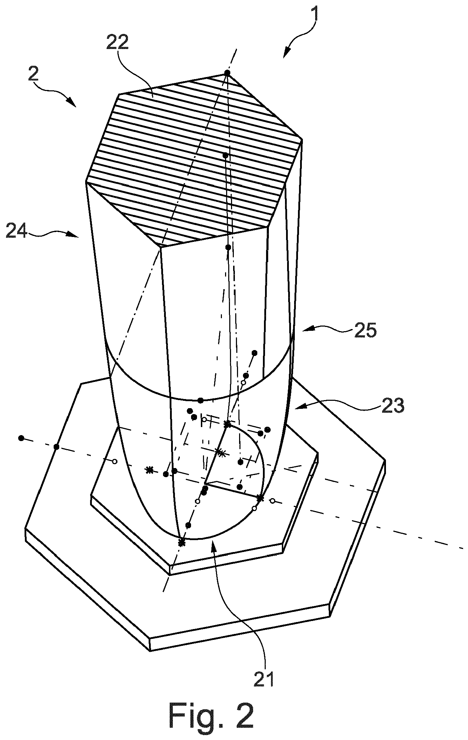

Figuren 1 und 2 zeigen ein optisches Element 1, das einen länglichen Körper 2 aufweist. Der Körper 2 erstreckt sich ausgehend von einem Lichteintrittsbereich 21 und entlang einer Längsachse hin zu einem Lichtaustrittsbereich 22. Über den Lichteintrittsbereich 21 kann Licht in den Körper 2 und damit in das optische Element 1 eingekoppelt werden, und über den Lichtaustrittsbereichen 22 kann der Körper 2 Licht aus dem optische Element 1 auskoppeln, beispielsweise um einen Raum, eine Fläche oder etwas Anderes zu beleuchten.

Der Lichteintrittsbereich 21 kann eine ellipsenförmige Kontur aufweisen. In anderen Ausführungsform kann der Lichteintrittsbereich 21 auch eine andere Kontur aufweisen, insbesondere eine kreisförmige Kontur. Der Lichteintrittsbereich 21 ist dafür geeignet, dass eine oder mehrere Lichtquellen 3 oder LEDs 31, 32 Licht in über den Lichteintrittsbereich in den Körper 2 einkoppeln können. Die Lichtquelle 3 weist vorzugsweise eine oder mehrere LEDs 31, 32 auf. Die (erste) LED 31 kann ausgebildet sein, um Licht einer ersten Farbtemperatur abzugeben, beispielsweise kaltweißes Licht. Die (zweite) LED 32 kann ausgebildet sein, um Licht einer zweiten Farbtemperatur abzugeben, vorzugsweise ein Licht mit einer Farbtemperatur, die von der ersten Farbtemperatur unterschiedlich ist, beispielsweise warmweißes Licht. Die LED 31 und/oder LED 32 kann/können jeweils ein Farbkonversionsmaterial aufweisen, das Licht zumindest teilweise in eine bestimmte Wellenlänge umwandeln kann, um dadurch die jeweils definierte Farbtemperatur einzustellen. Die LEDs 31, 32 können jeweils ein LED-Modul (das wiederum eine oder mehrere wie beschriebene LEDs aufweist), eine konventionelle LED oder eine OLED sein. Insbesondere könne die LEDs 31, 32 jeweils eine Mid-Power LED oder eine High-Power LED aufweisen oder sein.

Die Lichtquelle 3 ist nicht auf eine bestimmte Form beschränkt. Bevorzugt ist, wenn die Lichtquelle 3 sich entlang einer Längsrichtung erstreckt. Das heißt, dass die Lichtquelle 3 vorzugsweise länglich ausgebildet ist. Die Erstreckung der Lichtquelle 3 entlang der Längsrichtung kann sich beispielsweise durch die Anordnung der LEDs 31, 32 ergeben. Die Längsrichtung verläuft oder zeigt vorzugsweise von der LED 32 hin zur LED 31. Die Länge der Lichtquelle 3 ist parallel zu der Längsrichtung. In Richtung der Längsrichtung gesehen, ist die LED 31 vorzugsweise hinter der LED 32 angeordnet.

Die Lichtquelle 3 hat vorzugsweise eine rechteckige Form, also eine Form, die einem Rechteck entspricht. Wie in der Figur 1 erkennbar, können beispielsweise in Draufsicht gesehen im Wesentlichen quadratische LEDs 31, 32 nebeneinander angeordnet sein, wodurch die Lichtquelle 3, die diese LEDs 31, 32 aufweist, in Draufsicht gesehen eine Form mit rechteckigem Umriss hat. Mit anderen Worten kann die Breite der quadratischen Form jeder der LEDs 31, 32 die Breite des Rechtecks der Lichtquelle 3 definieren, wobei die Länge des Rechtecks der Lichtquelle 3 zumindest die Breite der einen LED 31 und die Breite der anderen LED 32 aufweist. Die Länge der Lichtquelle 3 kann zudem einen Abstand zwischen den Lichtquellen 31, 32 aufweisen, wobei der Abstand beispielsweise der Dicke eines Spalts zwischen den LEDs 31, 32 entspricht. Die LEDs 31, 32 können auf einer gemeinsamen Platte (Leiterplatte etc.) vorgesehen sein, die in Draufsicht gesehen mehreckig, insbesondere sechseckig ist. Die Platte kann auch rechteckig ausgebildet sein, wodurch die Lichtquelle 3 ihre rechteckige Form erhält. Die Lichtabgaberichtung der Lichtquelle 3 ist die Hauptabstrahlrichtung der Lichtquelle 3 und/oder parallel zu einer Achse, die senkrecht zu einer Ebene ist, die die Lichtquelle 3 aufweist. Beispielsweise kann die Platte die besagte Ebene aufweisen.

Die Lichtquelle 3 ist so vorgesehen, dass sie Licht über den Lichteintrittsbereich 21 in den Körper 2 einkoppelt. Hierfür kann die Lichtquelle 3 in einer Aussparung, die der Lichteintrittsbereich 21 aufweist, wenigstens teilweise angeordnet sein. Die Lichtquelle 3 kann aber auch mit Abstand zum Lichteintrittsbereich 21 vorgesehen sein. Der Lichteintrittsbereich 21 kann auch ohne eine Aussparung vorgesehen sein. Zum Beispiel kann der Lichteintrittsbereich 21 eine ebene Fläche aufweisen, die durch die beispielsweise ellipsenförmige Kontur begrenzt ist und zur Längsachse des Körpers 2 quer, vorzugsweise senkrecht verläuft.

Der Lichtaustrittsbereich 22 kann eine Kontur aufweisen, die einem Mehreck entspricht, beispielsweise einem Mehreck, dessen Seiten gerade und/oder gleichlang sind. Wie in den Figuren 1 und 2 beispielhaft dargestellt, kann das Mehreck, das den Lichtaustrittsbereich 22 begrenzt, beispielsweise ein Sechseck, vorzugsweise ein regelmäßiges Sechseck sein. Der Lichtaustrittsbereich 22 weist vorzugsweise eine ebene Fläche auf, die beispielsweise durch die mehreckige Kontur begrenzt ist und zur Längsachse des Körpers quer, vorzugsweise senkrecht verläuft. Die ebene Fläche des Lichtaustrittsbereichs 22 ist vorzugsweise parallel zur ebenen Fläche des Lichteintrittsbereichs 21. Bevorzugt ist, wenn der Lichteintrittsbereich 21 und der Lichtaustrittsbereich 22 an gegenüberliegenden Enden des Körpers 2 vorgesehen sind.

Wie in den Figuren 1 und 2 erkennbar, weist der Körper 2 zwei Teile (Abschnitte) auf, nämlich einen ersten Teil (Unterteil) 23 und einen zweiten Teil (Urteil) 24. Bevorzugt ist, wenn der Körper 2 aus den Teilen 23, 24 besteht.

Der erste Teil 23 erstreckt sich ausgehend von dem Lichteintrittsbereich 21. Bevorzugt ist, wenn der erste Teil 23 den Lichteintrittsbereich 21 aufweist. Der Lichteintrittsbereich 21 ist vorzugsweise ein erstes, unteres Ende des ersten Teils 23. Ausgehend von dem Lichteintrittsbereich 21 erstreckt sich der erste Teil 23 dann entlang der Längsachse hin zu einem Lichtübertragungsbereich 25. Der Lichtübertragungsbereich 25 kann aufweisen oder sein: ein zweites, oberes Ende des ersten Teils 23. Der Lichtübertragungsbereich 25 stellt die Verbindung von dem ersten Teil 23 zum zweiten Teil 24 her. Über den Lichtübertragungsbereich 25 können also Lichtstrahlen aus dem ersten Teil 23 in den zweiten Teil 24 übertragen werden. Der Lichtübertragungsbereich 25 ist nicht auf eine bestimmte Form beschränkt. Vorzugsweise weist der Lichtübertragungsbereich 25 eine, wie in den Figuren 1 und 2 beispielhaft dargestellte, kreisförmige Kontur auf. In anderen Ausführungsform kann der Lichtübertragungsbereich 25 auch eine andere Kontur aufweisen, beispielsweise eine Kontur, die einer Ellipse oder einem Mehreck entspricht. Entspricht die Kontur einem Mehreck, sind die Seiten dieses Mehrecks vorzugsweise gebogen ausgebildet. Das Mehreck kann insbesondere ein Sechseck sein.

Der erste Teil 23 ist zum Richten von Licht vorgesehen. Das heißt, der erste Teil 23 ist so ausgebildet, dass er wenigstens einen Teil der Lichtstrahlen, die über den Lichteintrittsbereich 21 in den ersten Teil 23 eintreten, eine definierte Richtung gibt, derart, dass die Lichtstrahlen dann in einem Lichtstrahlenbündel mit definiertem Ausstrahlwinkel (beispielsweise in einem Bereich von 50° bis 70° oder von 45° bis 55°) und/oder zumindest teilweise parallel zueinander verlaufen. Insbesondere kann der erste Teil 23 die Funktion eines parabolischen Reflektors und/oder Kollimators und/oder einer TIR-Linse aufweisen. Um über den Lichteintrittsbereich 21 in den ersten Teil 23 eintretende Lichtstrahlen so zu richten, dass sie in einem definierten Ausstrahlwinkel und/oder zumindest teilweise parallel zueinander über den Lichtübertragungsbereich 25 in den zweiten Teil 24 eintreten, weist der erste Teil 23 in einem ersten Schnitt parallel zur Längsachse eine bestimmte erste (Außen-)Kontur 230 auf. Der erste Schnitt hat eine Schnittebene, in der die Längsachse des Körpers 2 liegt. In den in Figuren 1 und 2 gezeigten Ausführungsbeispiel ist die Schnittebene zu der XZ-Ebene parallel. Die Schnittebene entspricht vorzugsweise der C0-180 Ebene.

Die erste Kontur 230 weist zwei laterale Seiten 231, 232 auf, die mit wenigstens einem Teil einer Parabel deckungsgleich sind. Mit anderen Worten können die lateralen Seiten 231, 232 durch Abschnitte einer Parabel definiert sein, die sich seitlich von dem Scheitelpunkt dieser Parabel erstrecken. Über den Lichteintrittsbereich 21 in den ersten Teil 23 eintretende und anschließend auf die lateralen Seiten 231, 232 treffende Lichtstrahlen, werden dort wegen der Form der lateralen Seiten 231, 232 so reflektiert, dass die so reflektierten Lichtstrahlen als Lichtstrahlenbündel in einem definierten Ausstrahlwinkel und/oder zumindest teilweise parallel zueinander über den Lichtübertragungsbereich 25 in den zweiten Teil 24 eintreten können. Die lateralen Seiten 231, 232 erstrecken sich vorzugsweise von dem Lichteintrittsbereich 21, beispielsweise ausgehend von der Kontur, die den Lichteintrittsbereich 21 begrenzt, bis hin zum Lichtübertragungsbereich 25, beispielsweise bis hin zu der Kontur, die den Lichtübertragungsbereich 25 definiert. Die lateralen Seiten 231, 232 definieren zumindest einen Teil des Lichteintrittsbereichs 21 und/oder zumindest einen Teil des Lichtübertragungsbereichs 25.

Der zweite Teil 24 ist vorzugsweise zum Durchmischen des Lichts, das über den Lichtübertragungsbereich 25 in den zweiten Teil 24 eintritt, vorgesehen, sodass über den Lichtaustrittsbereich 22 Licht abgegeben wird, das in dem zweiten Teil 24 entlang der Längsachse durchmischt wurde. Der zweite Teil 24 stellt also vorzugsweise eine längliche Strecke zur Durchmischung von Licht bereit. Hierzu weist der zweite Teil 24 in einem zweiten Schnitt quer zur Längsachse - also in den Figuren 1 und 2 dargestellten Ausführungsform in einem Schnitt, dessen Schnittebene parallel zu der XY-Ebene ist -, eine zweite (Außen-)Kontur 240 auf die einem Mehreck entspricht. In den in den Figuren 1 und 2 dargestelltem optischen Element 1 ist dieses Mehreck ein Sechseck. In anderen Ausführungsformen kann das Mehreck auch ein Dreieck, Viereck, Fünfeck etc. sein. Durch die Kontur 240 erhält der zweite Teil 24 eine Form, die wenigstens teilweise einer mehreckigen Säule entspricht. Der zweite Teil 24 definiert durch die zweite Kontur 240 seitliche Oberflächen, derart, dass Lichtstrahlen, die auf diese Oberflächen oder Konturen treffen, so reflektiert werden, dass die so reflektierten Lichtstrahlen nicht gerichtet sind, sondern beispielsweise quer oder schräg zueinander verlaufen und damit gut durchmischt sind.

Bevorzugt ist, wenn der zweite Teil 24 in einem (weiteren) Schnitt quer zur Längsachse eine Kontur 241 aufweist, die einem Mehreck entspricht, wobei die Seiten dieses Mehrecks gerade und gleichlang sind. Das Mehreck ist dabei vorzugsweise ein Sechseck, insbesondere ein regelmäßiges Sechseck. Der zweite Teil 24 kann in einem (noch weiteren) Schnitt quer zur Längsachse eine weitere Kontur 242 aufweisen, die (ebenfalls) einem Mehreck entspricht, wobei die Seiten dieses Mehrecks gebogen und vorzugsweise gleichlang sind. Insbesondere kann vorgesehen sein, dass der zweite Teil 24 in jedem Schnitt quer zur Längsachse eine Kontur aufweist, die einem Mehreck wie beispielsweise einem Sechseck entspricht. Dadurch kann der zweite Teil 24 durchgängig als eine mehreckige Säule ausgebildet sein. Die Säule weist vorzugsweise Flächen auf, die durch die Ecken begrenzt sind und entlang einer Richtung vom Lichtübergangsbereich 25 zum Lichtaustrittsbereich jeweils von einer konvexen Form in eine ebene oder flache Form übergehen.

In einem Schnitt parallel zur Längsachse kann der zweite Teil 24 eine Kontur aufweisen, deren laterale Seiten jeweils wenigstens teilweise gebogen oder gerade sind und/oder wenigstens teilweise parallel zueinander verlaufen. Diese lateralen Seiten definieren dabei zumindest einen Teil der zweiten Kontur 240, vorzugsweise einen Teil jeder der Konturen 240, 241, 242.

Bevorzugt ist, wenn der erste Teil 23 in einem dritten Schnitt parallel zur Längsachse und senkrecht zum ersten Schnitt - in der in den Figuren 1 und 2 dargestellten Ausführungsform also in einem Schnitt, dessen Schnittebene parallel zur YZ-Ebene ist (die Schnittebene entspricht vorzugsweise der C90-270 Ebene) -, eine dritte Kontur 233 aufweist, die zwei laterale Seiten 234, 235 aufweist, die mit wenigstens einem Teil einer weiteren Parabel deckungsgleich sind. Mit anderen Worten können die lateralen Seiten 234, 235 durch Abschnitte einer weiteren Parabel definiert sein, die sich seitlich von dem Scheitelpunkt dieser Parabel erstrecken. Über den Lichteintrittsbereich 21 in den ersten Teil 23 eintretende Lichtstrahlen, die anschließend auf die lateralen Seiten 234, 235 treffen, werden dann wegen der Form der lateralen Seiten 234, 235 dort so reflektiert, dass die so reflektierten Lichtstrahlen gerichtet, insbesondere in einem Lichtstrahlenbündel mit definiertem Ausstrahlwinkel und/oder zumindest teilweise parallel zueinander, über den Lichtübertragungsbereich 25 in den zweiten Teil 24 eintreten können. Die lateralen Seiten 234, 235 erstrecken sich vorzugsweise von dem Lichteintrittsbereich 21, beispielsweise ausgehend von der Kontur, die den Lichteintrittsbereich 21 begrenzt, bis hin zum Lichtübertragungsbereich 25 oder der Kontur, die den Lichtübertragungsbereich 25 definiert. Die lateralen Seiten 234, 235 definieren also zumindest einen (weiteren) Teil des Lichteintrittsbereichs 21 und/oder zumindest einen (weiteren) Teil des Lichtübertragungsbereichs 25.

Die dritte Kontur 233 kann sich von der ersten Kontur 230 unterscheiden. Zum Beispiel können die lateralen Seiten 233, 234 der dritten Kontur 233 deckungsgleich mit wenigstens einem Teil einer Parabel sein, die von der oben genannten Parabel, die die erste Kontur 230 definiert, unterschiedlich ist. Dadurch kann in einer Ebene senkrecht zur Längsachse - also in den Figuren 1 und 2 in einer Ebene parallel zu der XY-Ebene -, eine erste Breite, die durch die lateralen Seiten 231, 232 definiert ist, kleiner sein als eine zweite Breite, die durch die lateralen Seiten 234, 235 definiert ist. Derartige Konturen 230, 233 können beispielsweise, wie insbesondere die Figur 1 erkennen lässt, durch eine Art Paraboloid gebildet sein, der nicht rotationssymmetrisch ist und einen unteren, den Scheitel des Paraboloids aufweisenden Teil nicht aufweist. Mit anderen Worten kann eine solche Form einem Teil eines Paraboloids entsprechen, der in einer Ebene quer zur Längsachse eine Breite aufweist, die größer ist als dessen Tiefe.

Wie insbesondere die Figur 1 gut erkennen lässt, ist es bevorzugt, wenn der erste Teil 23 in einem und vorzugsweise jedem Schnitt quer zur Längsachse eine Kontur aufweist, die einer Ellipse oder einem Kreis entspricht. Zum Beispiel kann vorgesehen sein, dass der erste Teil 23 in einem Schnitt quer zur Längsachse eine Kontur 236 aufweist, die einer Ellipse entspricht, und in einem weiteren Schnitt, der im Vergleich zum ersten Schnitt näher an dem Lichtübertragungsbereich 25 vorgesehen (oder durch diesen verläuft) und quer zur Längsachse ist, eine Kontur 237 aufweist, die einem Kreis entspricht.

Der erste Teil 23 und/oder der zweite Teil 24 ist/sind vorzugsweise kein/keine Hohlkörper. In anderen Ausführungsform kann jedoch auch vorgesehen sein, dass zumindest der erste Teil 23 in Form eines Hohlkörpers vorgesehen ist, beispielsweise indem der erste Teil 23 eine Reflektorschale aufweist oder ist. Der erste Teil 23 ist vorzugsweise ein Vollkörper und weist damit in zumindest einem und vorzugsweise jedem Schnitt quer zur Längsachse einen Vollquerschnitt auf. Analoges gilt für den zweiten Teil 24.

Der erste Teil 23 und der zweite Teil 24 können einstückig miteinander ausgebildet sein. Das heißt, der Lichtübertragungsbereich 25 stellt vorzugsweise eine integrale Verbindung zwischen den Teilen 23, 24 dar. Mit anderen Worten sind die Teile 23, 24 im dem Lichtübertragungsbereich 25 integral miteinander verbunden. Vor allem kann über den Lichtübertragungsbereich 25 ein stetiger Übergang von dem ersten Teil 23 zu dem zweiten Teil 24 erfolgen. Ein stetiger Übergang bedeutet hierbei, dass der Übergang vom ersten Teil 23 zum zweiten Teil 24 keine Stufe aufweist.

In einer anderen Ausführungsform können der erste Teil 23 und der zweite Teil 24 auch getrennt voneinander vorgesehen sein, also miteinander nicht integral verbunden sein. Dadurch ist es möglich, dass der zweite Teil 24 von dem ersten Teil 23 und/oder der erste Teil 23 von dem zweiten Teil 23 gelöst werden kann. Der Lichtübertragungsbereich 24 stellt vorzugsweise den Kontaktbereich zwischen den Teilen 23, 24 dar. Der Lichtübertragungsbereich 25 ist vorzugsweise so vorgesehen, dass zwischen den Teilen 23, 24 kein Spalt (Luftspalt etc.) ausgebildet ist. Die Verbindung zwischen den Teilen 23, 24 kann beispielsweise über ein Befestigungsmittel wie beispielsweise Klebstoff erfolgen. Vorzugsweise weist der Lichtübertragungsbereich 25 das Befestigungsmittel auf.

Der Körper 2, vorzugsweise die Teile 23, 24, kann durch Spritzgießen erhalten sein. Der Körper 2 kann insbesondere aus einem Material hergestellt sein, das transparent ist und/oder Kunststoff und/oder Glas aufweist oder daraus besteht. Zum Beispiel kann in einem Herstellungsverfahren eine Form bereitgestellt werden, in die das Material (beispielsweise als flüssiges Rohmaterial) gegeben wird, um den Körper 2 und damit die Teile 23, 24 bereitzustellen.

Der Körper 2 weist eine Gesamtlänge auf, die dem (kürzesten) Abstand zwischen dem Lichteintrittsbereich 21 und dem Lichtaustrittsbereich 22 entspricht. Diese Gesamtlänge kann 18 mm oder mehr, insbesondere 20 mm oder mehr betragen und/oder beispielsweise in einem Bereich von 18 mm bis 22 mm, insbesondere in einem Bereich von 19 mm bis 21 mm liegen. Der erste Teil 23 hat eine erste Länge, die vorzugsweise dem (kürzesten) Abstand zwischen dem Lichteintrittsbereich 21 und dem Lichtübertragungsbereich 25 entspricht. Die erste Länge entspricht wenigstens 20 %, bevorzugt wenigstens 40 %, besonders bevorzugt 50 % oder mehr der Gesamtlänge des Körpers 2, wobei der Rest der Gesamtlänge vorzugsweise die zweite Länge ist, die der zweite Teil 24 aufweist. Die zweite Länge entspricht vorzugsweise dem (kürzesten) Abstand zwischen dem Lichtübertragungsbereich 25 und dem Lichtaustrittsbereich 22. Bevorzugt ist, wenn die zweite Länge des zweiten Teils 24 wenigstens 20 %, vorzugsweise wenigstens 40 %, besonders bevorzugt 50 % oder mehr der Gesamtlänge des Körpers 2 entspricht.

Der Lichtaustrittsbereich 22 kann eine Streustruktur zur streuenden Lichtabgabe aufweisen, beispielsweise ein Streumaterial und/oder Streupartikel. Die Streustruktur kann insbesondere eine Folie aufweisen, die beispielsweise auf den Lichtaustrittsbereich 22 befestigt, vorzugsweise geklebt ist und/oder integral mit dem Körper 2, insbesondere dem Teil 24, ausgebildet ist. Vor allem kann die Streustruktur ausschließlich in dem Lichtaustrittsbereich 22 vorgesehen sein. Das heißt, andere Teile des Körpers 2 wie beispielsweise der Teil 23, der Lichteintrittsbereich 21 und/oder der Lichtübertragungsbereich 25 weisen keine Streustruktur auf, insbesondere kein Streumaterial oder keine Streupartikel und/oder keine dreidimensionale Struktur (Rillen etc.).

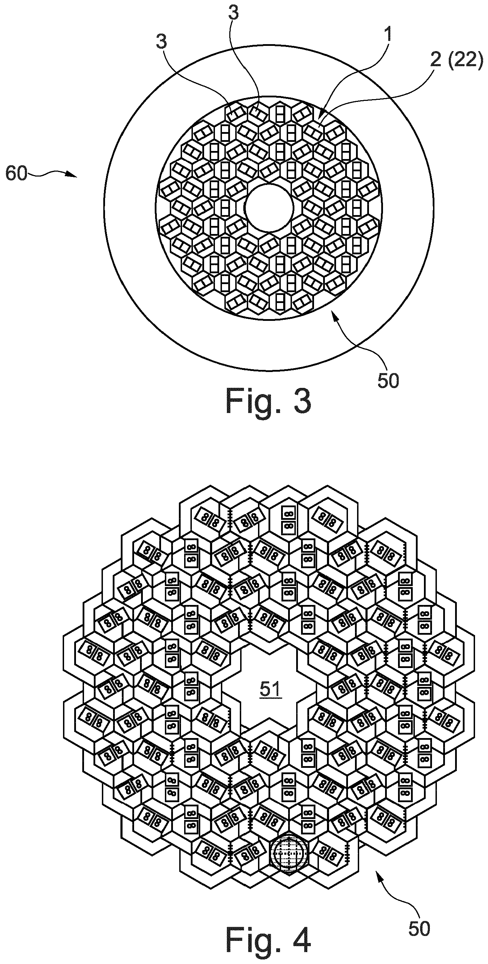

In den Figuren 3 und 4 ist jeweils eine Ausführungsform eines optischen Systems 50 beispielhaft gezeigt. Das optische System 50 weist mehrere wie oben beschriebene optische Elemente 1 auf. Die optischen Elemente 1 sind dabei nebeneinander so angeordnet, dass die Längsachsen der optischen Elemente 1 parallel zueinander verlaufen und voneinander beabstandet sind. Die optischen Elemente 1 können insbesondere so nebeneinander angeordnet sein, dass ihre Lichtaustrittsbereiche 22 eine in Draufsicht gesehen (also in Richtung parallel zu den jeweiligen Längsachsen gesehen) geschlossene Fläche bilden. Dadurch sind die optischen Elemente 1 in einer Richtung senkrecht zu den jeweiligen Längsachsen gestapelt und/oder geschachtelt. Die optischen Elemente 1 können also durch ihre Form, die durch den jeweiligen Körper 2 definiert ist, dicht nebeneinander angeordnet sein.

Die geschlossene Fläche, die sich durch die nebeneinander angeordneten Lichtaustrittsbereiche 22 ergibt, kann beispielsweise eine, wie in den Figuren 3 und 4 beispielhaft dargestellte, Ringform bilden. Der Ring dieser Ringform begrenzt vorzugsweise einen Raum 51, in dem beispielsweise eine Befestigungsvorrichtung angeordnet sein kann, mit der das optische System 50 beispielsweise an etwas (einer Leuchte, einer Montagestelle etc.) befestigt werden kann. Die (dicht) nebeneinander angeordneten optischen Elemente 1 bilden die geschlossene, durch die einzelnen Lichtaustrittsbereiche 22 gebildete Fläche vorzugsweise so aus, dass neben benachbarten Lichtaustrittsbereichen 22 kein Spalt gebildet ist, über den von oberhalb der Lichtaustrittsflächen 22 - also von der Lichtaustrittsseite aus -in einen gegebenenfalls vorgesehenen Raum zwischen den jeweils benachbarten optischen Elementen 1 gegriffen werden kann. Mit anderen Worten sind bei einem Blick auf die Lichtaustrittsbereiche 22 und in einer Richtung parallel zu den jeweiligen Längsachsen allenfalls Fugen zwischen benachbarten optischen Elementen 1 zu erkennen, wobei die Fugen sich durch den vorzugsweise flächigen Kontakt zwischen den zweiten Teilen 24 der benachbarten optischen Elemente 1 ergeben.

Die optischen Elemente 1 sind in dem optischen System 50 vorzugsweise so aneinander angrenzend angeordnet, dass die Lichtaustrittsbereiche 22 bei Blick in Richtung parallel zu den jeweiligen Längsachsen gesehen ein Gitter oder Raster bilden. Das Gitter wird durch die Kontur der jeweiligen Lichtaustrittsbereiche 22 gebildet, wodurch jedes der Gitterelemente beispielsweise eine mehreckige, insbesondere sechseckige Form aufweisen kann. Wenn jeder Lichtaustrittsbereich 22 eine sechseckige Kontur aufweist, kann das durch die Lichtaustrittsbereiche 22 gebildete Gitter beispielsweise ein wabenförmiges Gitter sein. Insbesondere können die optischen Elemente 1 so aneinander angrenzend angeordnet sein, dass die Fugen zwischen benachbarten Lichtaustrittsbereichen 22 das Gitter bilden.

Das optische System 50 weist die optischen Elemente 1 in einer Ausführungsform also so auf, dass nebeneinander angeordnete optische Elemente 1 über ihre Lichtaustrittsbereiche 22 eine geschlossene Ringform bilden. Wie die Figuren 3 und 4 erkennen lassen, kann das optische System 50 die Form eines Rings aufweisen, der wiederum durch einen oder mehrere (Unter-)Ringe, die jeweils durch aneinander angrenzende optische Elemente 1 zur Bildung des jeweiligen (Unter-)Rings angeordnet sind, gebildet sein kann. Die so gebildeten (Unter-)Ringe, die unterschiedliche Durchmesser aufweisen, sind dann über die Form der zweiten Teile 24 ineinander gestapelt und/oder geschachtelt, wodurch das optische System 50 vorzugsweise eine Ringform bildet, die eine geschlossene Fläche aufweist, die durch die einzelnen Lichtaustrittsbereiche 22 gebildet ist.

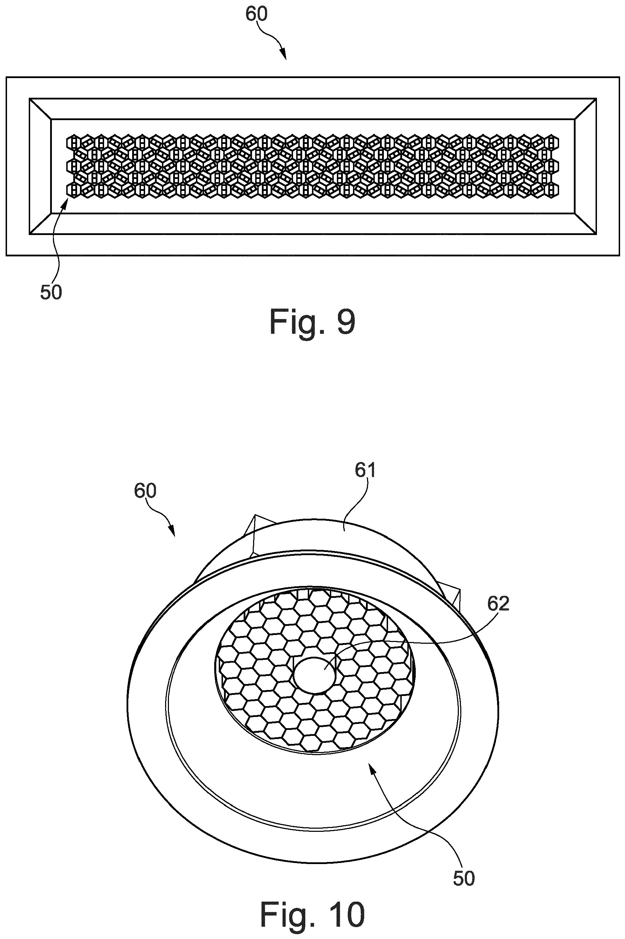

Das optische System 50 ist jedoch nicht auf eine bestimmte, durch die einzelnen optischen Elemente 1 gebildete Form beschränkt. Wie beispielhaft in der Figur 9 erkennbar, kann das optische System 50 die optischen Elemente 1 in einer anderen Ausführungsform auch so aufweisen, dass die nebeneinander angeordneten optischen Elemente 1 eine Form bilden, die sich entlang einer (geraden) Längsachse erstreckt. Diese längliche Form des optischen Elements 50 kann durch eine oder mehrere (beispielsweise zwei, drei, vier, fünf oder mehr) Zeilen oder Reihen, die jeweils aneinander angrenzende optische Element 1 zur Bildung der jeweiligen Zeile bzw. Reihen aufweist, gebildet sein. Die mehreren Zeilen oder Reihen an optischen Elementen 1 können über ihre jeweiligen zweiten Teile 24 so in einer Richtung senkrecht zu den Längsachsen gestapelt und/oder geschachtelt sein, dass das optische System 50 vorzugsweise eine (gerade) Form mit mehreren Zeilen (oder Reihen) und einer oder mehreren (zwei oder mehr, beispielsweise zumindest 10 oder zumindest 20 oder zumindest 30), jeweils durch optische Elemente 1 gebildete Spalten aufweist.

In den Figuren 3, 4 und 9 sind ferner mehrere Lichtquellen 3 erkennbar, die jeweils vorzugsweise die erste LED 31 und die zweite LED 32 aufweisen. Das optische System 50 bildet zusammen mit den Lichtquellen 3 eine Leuchte 60. Jede der Lichtquellen 3 ist einem jeweiligen optischen Element 1 zugeordnet. Erkennbar ist, dass die Lichtquellen 3 in einer Richtung parallel zu den jeweiligen Längsachsen gesehen nicht identisch ausgerichtet sind. Die Längsrichtungen aller Lichtquellen 3 sind, anders gesagt, nicht alle parallel zueinander. Vielmehr sind die Lichtquellen 3 so angeordnet, dass die Längsrichtung einer ersten Lichtquelle 3 zu der Längsrichtung einer zweiten Lichtquelle 3 entgegengesetzt oder quer, insbesondere schräg (also insbesondere nicht senkrecht) verläuft. Die Längsrichtung der ersten Lichtquelle 3 kann zu der Längsrichtung einer dritten Lichtquelle 3 parallel verlaufen, wobei die Längsrichtung der ersten Lichtquelle 3 auch zu der Längsrichtung der zweiten Lichtquelle 3 quer, insbesondere schräg verläuft.

Das Mehreck der zweiten Kontur 240 hat eine Anzahl an Seiten, wobei das optische System 50 zumindest eine Anzahl an optischen Elementen 1 aufweist, die der Anzahl der Seiten des Mehrecks der zweiten Kontur 240 entspricht. Die Leuchte 60 weist eine der Anzahl an optischen Elementen 1 entsprechende Anzahl an Lichtquellen 3 auf. Jede der Lichtquellen 3 ist so angeordnet, dass die jeweilige Längsrichtung parallel zu einer Seite des Mehrecks der Kontur 240 des jeweils zugeordneten optischen Elements ist und zudem von den Längsrichtungen der jeweils anderen Lichtquellen 3 aus einer Menge an Lichtquellen 3, die eine Anzahl an Lichtquellen 3 aufweist, welche Anzahl genau der Anzahl an Seiten des Mehrecks der zweiten Kontur 240 entspricht, unterschiedlich ist.

Die Längsrichtungen der Lichtquellen 3 können einen Winkel einschließen. Der Winkel entspricht dabei vorzugsweise 360° geteilt durch die Anzahl der Seiten des Mehrecks oder einem ganzzahligen Vielfachen (wobei dieses Vielfache maximal die Anzahl der Seiten des Mehrecks minus eins ist) von 360° geteilt durch die Anzahl der Seiten des Mehrecks. Ist das Mehreck der zweiten Kontur 42 zum Beispiel ein (regelmäßiges) Sechseck, so kann der Winkel, den die Längsrichtungen einschließen, 60°, 120°, 180°, 240° oder 300° entsprechen. Die Leuchte 60 kann zumindest wie folgt zueinander angeordnete Lichtquellen 3 aufweisen:
- Winkel zwischen der Längsrichtung der ersten Lichtquelle 3 und der Längsrichtung der zweiten Lichtquelle 3 entspricht 60°;
- Winkel zwischen der Längsrichtung der ersten Lichtquelle 3 und der Längsrichtung der dritten Lichtquelle 3 entspricht 120°;
- Winkel zwischen der Längsrichtung der ersten Lichtquelle 3 und der Längsrichtung der vierten Lichtquelle 3 entspricht 180°;
- Winkel zwischen der Längsrichtung der ersten Lichtquelle 3 und der Längsrichtung der fünften Lichtquelle 3 entspricht 240°;
- Winkel zwischen der Längsrichtung der ersten Lichtquelle 3 und der Längsrichtung der sechsten Lichtquelle 3 entspricht 300°.

Die optischen Elemente 1 sind dabei bevorzugt entsprechend der Ausrichtung der jeweiligen Lichtquelle 3 ausgerichtet. Zum Beispiel ist eine Ebene, in der sich die erste Kontur 230 des einen (beispielsweise ersten) optischen Elements 1 erstreckt, parallel oder quer zu einer Ebene, in der sich die erste Kontur 230 des anderen (beispielsweise zweiten, dritten, vierten etc.) optischen Elements 1 erstreckt. Ist jeder der oben genannten Lichtquellen 3 einem jeweiligen optischen Elementen 1 zugeordnet, kann der Winkel zwischen der Ebene des ersten optischen Elements 1 und der Ebene jedes weiteren (d.h. zweiten, dritten, vierten, fünften oder sechstens) optischen Elements 1 dem Winkel zwischen den Längsrichtungen der jeweiligen Lichtquellen 3 entsprechen. Die Längsrichtung jeder Lichtquelle 3 kann dabei parallel oder senkrecht zu der Ebene des jeweils zugeordneten optischen Elements 1 sein.

Für eine besonders homogene Lichtverteilung ist es bevorzugt, wenn die Anzahl der unterschiedlichen Ausrichtungen gleich ist. Insbesondere kann die Anzahl der Lichtquellen 3 mit einer ersten Ausrichtung gleich der Anzahl der Lichtquellen 3 mit einer zweiten, von der ersten Ausrichtung unterschiedlichen Ausrichtung sein.

In der Figur 10 ist eine Ausführungsform der Leuchte 60 dargestellt, die einen optionalen Reflektor 61 aufweist. Der Reflektor 61 ist vorzugsweise ein parabolischer Reflektor. Der Reflektor 61 kann in Draufsicht gesehen eine Form aufweisen, die der durch das optische System 50 gebildeten Form entspricht. Insbesondere kann der Reflektor 61 kasten- oder topfförmig ausgebildet sein. Der Reflektor 61 kann einen Raum begrenzen, in dem das optische System 50 wenigstens teilweise angeordnet ist. Der Reflektor 61 kann wenigstens auf seiner reflektierenden Oberfläche, über die der Reflektor die aus dem optischen System 50 ausgekoppelten Lichtstrahlen reflektiert (zum Beispiel eine nach innen, in den vom Reflektor 61 begrenzten Raum gerichtete Fläche), glänzend, insbesondere hochglänzend, und/oder matt ausgebildet sein. Der Reflektor 61 kann ein glanz- (hochglanz- bzw. hochspiegelnder etc.) und/oder matter Reflektor sein.

Aus dem optischen System 50 austretende Lichtstrahlen können durch den Reflektor reflektiert und vorzugsweise gerichtet werden, beispielsweise um eine noch weitere Entblendung zu bewirken. Durch den Reflektor 61 kann der UGR-Wert der Leuchte 60 folglich noch weiter nach unten gedrückt werden (insbesondere wenn der Reflektor zumindest teilweise glänzend oder hochglänzend ausgebildet ist) und/oder eine sogenannte cut-off Funktion erfüllt werden (insbesondere wenn der Reflektor zumindest teilweise matt und glänzend, insbesondere hochglänzend bzw. hochspiegelnd ausgebildet ist). Durch die cut-off Funktion kann ein besonders schmaler Lichtkegel durch die Leuchte 60 bereitgestellt werden. Das optische System 50 ist in der in Figur 10 gezeigten Ausführungsform in der Form eines Rings vorgesehen, wobei in dem von diesem Ring begrenzten Raum 51 ein vorzugsweise stabförmiges Element 62 vorgesehen ist, beispielsweise ein Vorsprung, der von einer Ebene, die durch die Lichtaustrittsbereiche 22 definiert ist, hervorragt. Das Element 62 kann beispielsweise ein Verbindungselement sein, über das die Leuchte 60 und/oder das optische System 50 an etwas (Montagestelle wie beispielsweise eine Decke oder Wand etc.) befestigt werden kann.

Die Erfindung ist nicht auf die zuvor beschriebenen Merkmale beschränkt, insbesondere lassen sich die zuvor beschriebenen Merkmale in beliebiger Weise miteinander kombinieren.

## Patentansprüche

1. Optisches Element (1), aufweisend einen länglichen Körper (2), der sich ausgehend von einem Lichteintrittsbereich (21) und entlang einer Längsachse hin zu einem Lichtaustrittsbereich (22) erstreckt, wobei der Körper (2) aufweist:
einen ersten Teil (23), der sich ausgehend von dem Lichteintrittsbereich (21) und entlang der Längsachse hin zu einem Lichtübertragungsbereich (25) erstreckt, und
einen zweiten Teil (24), der sich ausgehend von dem Lichtübertragungsbereich (25) und entlang der Längsachse hin zu dem Lichtaustrittsbereich (22) erstreckt,
wobei der erste Teil (23) in einem ersten Schnitt parallel zur Längsachse eine erste Kontur (230) aufweist, deren laterale Seiten (231, 232) deckungsgleich mit wenigstens einem Teil einer Parabel sind, sodass über den Lichteintrittsbereich (21) in den ersten Teil (23) eintretende und auf die lateralen Seiten (231, 232) treffende Lichtstrahlen so von den lateralen Seiten (231, 232) reflektiert werden, dass die so reflektierten Lichtstrahlen gerichtet über den Lichtübertragungsbereich (25) in den zweiten Teil (24) eintreten, und
wobei der zweite Teil (24) in einem zweiten Schnitt quer zur Längsachse eine zweite Kontur (240) aufweist, die einem Mehreck entspricht.

2. Optisches Element (1) nach Anspruch 1, wobei der erste Teil (23) in einem dritten Schnitt parallel zur Längsachse und senkrecht zum ersten Schnitt eine dritte Kontur (233) aufweist, deren laterale Seiten (234, 235) deckungsgleich mit wenigstens einem Teil einer weiteren Parabel, die von der Parabel vorzugsweise unterschiedlich ist, sind, sodass über den Lichteintrittsbereich (21) in den ersten Teil (23) eintretende und auf die lateralen Seiten (234, 235) der dritten Kontur (233) treffende Lichtstrahlen so von diesen lateralen Seiten (234, 235) reflektiert werden, dass die so reflektierten Lichtstrahlen gerichtet über den Lichtübertragungsbereich (25) in den zweiten Teil (24) eintreten,
wobei vorzugsweise in einer Ebene senkrecht zur Längsachse die lateralen Seiten (231, 232) der ersten Kontur (230) eine erste Breite und die lateralen Seiten (234, 235) der dritten Kontur (233) eine zweite Breite definieren, wobei die erste Breite kleiner ist als die zweite Breite, und/oder
wobei der erste Teil (23) in einem oder jedem Schnitt quer zur Längsachse eine ellipsenförmige oder kreisförmige Kontur aufweist,
und/oder
wobei der erste Teil (23) in einem oder jedem Schnitt quer zur Längsachse einen Vollquerschnitt aufweist,
und/oder
wobei der erste Teil (23) eine erste Länge aufweist, die wenigstens 20%, vorzugsweise wenigstens 40%, besonders bevorzugt 50% oder mehr der Gesamtlänge des Körpers (2) entspricht.

3. Optisches Element (1) nach einem der vorhergehenden Ansprüche, wobei der zweite Teil (24) in einem Schnitt parallel zur Längsachse eine Kontur aufweist, deren laterale Seiten jeweils wenigstens teilweise gerade und/oder gebogen sind und/oder parallel zueinander verlaufen, und/oder
wobei die zweite Kontur (240) einem Mehreck entspricht, dessen Seiten gebogen oder gerade sind und/oder gleichlang sind, und/oder wobei das Mehreck der zweiten Kontur (240) ein vorzugsweise regelmäßiges Sechseck ist, und/oder
wobei der zweite Teil (24) in jedem Schnitt quer zur Längsachse eine Kontur aufweist, die einem Mehreck wie beispielsweise einem Sechseck entspricht, und/oder
wobei der zweite Teil (24) in einem oder jedem Schnitt quer zur Längsachse einen Vollquerschnitt aufweist, und/oder
wobei der zweite Teil (24) eine zweite Länge aufweist, die wenigstens 20%, vorzugsweise wenigstens 40%, besonders bevorzugt 50% oder mehr der Gesamtlänge des Körpers (2) entspricht.

4. Optisches Element (1) nach einem der vorhergehenden Ansprüche, wobei der Lichteintrittsbereich (21) eine ellipsenförmige Kontur aufweist, und/oder wobei der Lichteintrittsbereich (21) eine ebene Fläche aufweist, die quer zu der Längsachse verläuft, oder wobei der Lichteintrittsbereich (21) eine Aussparung zur Aufnahme einer oder mehrerer Lichtquellen (3) oder LEDs (31, 32) aufweist.

5. Optisches Element (1) nach einem der vorhergehenden Ansprüche, wobei der Lichtübertragungsbereich (25) eine kreisförmige oder mehreckige Kontur aufweist, wobei die Seiten der mehreckigen Kontur vorzugsweise gebogen sind, und/oder
wobei der Lichtaustrittsbereich (22) eine Kontur aufweist, die einem Mehreck entspricht, beispielsweise einem Mehreck, dessen Seiten gerade und/oder gleichlang sind.

6. Optisches Element (1) nach einem der vorhergehenden Ansprüche, wobei der Lichtaustrittsbereich (22) eine Streustruktur zur streuenden Lichtabgabe aufweist,
wobei vorzugsweise die Streustruktur ein Streumaterial und/oder Streupartikel und/oder geometrische Strukturen wie beispielsweise Rillen und/oder Aufrauhungen aufweist,
wobei vorzugsweise die Streustruktur eine Folie aufweist,
wobei vorzugsweise die Streustruktur integral mit dem Körper (2) ausgebildet ist.

7. Optisches Element (1) nach einem der vorhergehenden Ansprüche, wobei der erste und zweite Teil (23, 24) einstückig miteinander ausgebildet sind, und/oder
wobei der Körper (2) durch Spritzgießen erhalten ist.

8. Optisches System (50), aufweisend mehrere optische Elemente (1) nach einem der vorhergehenden Ansprüche.

9. Optisches System (50) nach Anspruch 8, wobei die optischen Elemente (1) über ihre zweiten Teile (24) miteinander in vorzugsweise flächigem Kontakt stehen, und/oder
wobei die optischen Elemente (1) so aneinander angrenzend angeordnet sind, dass die Lichtaustrittsbereiche (22) in Richtung parallel zu den jeweiligen Längsachsen gesehen ein vorzugsweise wabenförmiges Gitter bilden.

10. Optisches System (50) nach einem der Ansprüche 8 bis 9, ferner aufweisend einen Reflektor (61), wobei der Reflektor (61) vorzugsweise einen Raum begrenzt, in dem die optischen Elemente (1) jeweils wenigstens teilweise angeordnet sind.

11. Optisches System (50) nach einem der Ansprüche 8 bis 10, wobei die erste Kontur (230) jedes optischen Elements (1) sich in einer jeweiligen Ebene erstreckt, wobei die optischen Elemente (1) so angeordnet sind, dass die Ebene des einen optischen Elements (1) zu der Ebene des anderen optischen Elements (1) parallel oder quer ist,
wobei vorzugsweise der Winkel, den die Ebenen einschließen, 360° geteilt durch die Anzahl der Seiten des Mehrecks der zweiten Kontur (240) oder einem ganzzahligen Vielfachen von 360° geteilt durch die Anzahl der Seiten des Mehrecks der zweiten Kontur (240) entspricht, beispielsweise 60°, 120°, 180°, 240° oder 300°.

12. Leuchte (60), aufweisend:
ein optisches Element (1) nach einem der Ansprüche 1 bis 7 oder ein optisches System (50) nach einem der Ansprüche 8 bis 11, und
eine oder mehrere Lichtquellen (3).

13. Leuchte (60) nach Anspruch 12, mit wenigstens zwei Lichtquellen (3), die sich jeweils entlang einer jeweiligen Längsrichtung erstrecken, wobei die Lichtquellen (3) so angeordnet sind, dass die Längsrichtung der einen Lichtquelle (3) zu der Längsrichtung der anderen Lichtquelle (3) entgegengesetzt oder quer verläuft.

14. Leuchte (60) nach Anspruch 13, wobei jede der Lichtquellen (3) so angeordnet ist, dass die jeweilige Längsrichtung parallel oder senkrecht verläuft zu:
- einer Ebene, in der sich die erste Kontur (230) des der jeweiligen Lichtquelle (3) zugeordneten optischen Elements (1) erstreckt, und/oder
- einer Seite des Mehrecks der zweiten Kontur (240) des der jeweiligen Lichtquelle (3) zugeordneten optischen Elements (1), und/oder
wobei die Lichtquellen (3) in Lichtabgaberichtung gesehen jeweils rechteckig ausgebildet sind,
und/oder
wobei der Winkel, den die Längsrichtungen einschließen, 360° geteilt durch die Anzahl der Seiten des Mehrecks der zweiten Kontur (240) oder einem ganzzahligen Vielfachen von 360° geteilt durch die Anzahl der Seiten des Mehrecks der zweiten Kontur (240) entspricht, beispielsweise 60°, 120°, 180°, 240° oder 300°.

15. Leuchte (60) nach einem der Ansprüche 12 bis 14, wobei jede der Lichtquellen (3) nur eine LED oder zwei LEDs (31, 32) aufweist, insbesondere eine erste LED (31) zur Abgabe von kaltweißem Licht und eine zweite LED (32) zur Abgabe von warmweißem Licht,
wobei vorzugsweise die LEDs (31, 32) entlang der Längsrichtung der jeweiligen Lichtquelle (3) angeordnet sind, besonders vorzugsweise derart, dass die erste LED (31) in Längsrichtung gesehen hinter der zweiten LED (32) angeordnet ist.
